# FASCICULE DE BREVET EUROPEEN

(11) **EP 2 203 326 B1**
(45) Date de publication et mention de la délivrance du brevet: **11.12.2013**
(21) Numéro de dépôt: 08838725.3
(22) Date de dépôt: 17.10.2008
(51) Int. Cl.: B60K 37/02

(54) **TABLEAU DE BORD ET PROCEDE D'AFFICHAGE D'UN PREMIER SYMBOLE ET D'UN DEUXIEME SYMBOLE**
ARMATURENBRETT UND ANZEIGEVERFAHREN FÜR EIN ERSTES UND EIN ZWEITES SYMBOL
INSTRUMENT PANEL AND METHOD FOR DISPLAYING A FIRST SYMBOL AND A SECOND SYMBOL

(30) Priorité: 19.10.2007 DE 102007050543
(43) Date de publication de la demande: 07.07.2010
(73) Titulaire: Johnson Controls Technology Company, Plymouth, Michigan 48170 (US)
(72) Inventeur: DOLLE, Christophe, F-95520 Osny (FR)
(74) Mandataire: Schwöbel, Thilo K.
(86) Numéro de dépôt international: PCT/EP2008/008825
(87) Numéro de publication internationale: WO 2009/049902

(56) Documents cités:
- WO-A-01/28803
- DE-A1- 10 018 336
- DE-A1- 10 352 933
- FR-A- 2 791 620

## Description

La présente invention concerne un procédé d'affichage d'un premier symbole et d'un deuxième symbole.

Il est maintenant de pratique courante d'afficher des symboles d'alerte ou de sécurité sur une surface d'affichage d'un tableau de bord de façon à informer un utilisateur d'un véhicule d'un état d'urgence par rapport à une grandeur comme la température ou la pression de l'huile dans un moteur à combustion ou alors la température de l'eau de refroidissement ou alors un état d'erreur dans un système comme le système antiblocage (ABS) ou le correcteur électronique de trajectoire (ESP). Il est connu, de réaliser la possibilité d'informer l'utilisateur du véhicule de façon à prévoir pour chaque symbole à afficher une partie particulière d'une surface d'affichage. Par une telle réalisation, les différents symboles sont affichés de manière écartés l'un de l'autre sur la surface d'affichage, notamment sur une surface d'affichage d'un tableau de bord. Par conséquence, cette réalisation requiert une surface d'affichage relativement grande consacrée à l'affichage d'un certain nombre de symboles différents. Ceci malgré le fait que la totalité de la surface d'affichage dans un tableau de bord reste relativement limitée. De plus, de par un endroit différent pour différents symboles d'alerte ou de sécurité, les informations affichées sur le tableau de bord sont moins clairement présentées.

Des documents DE 195 07 997 B4 et DE 10 2005 035 481 A1, il est également connu de prévoir un dispositif d'affichage pour des symboles d'alerte ou de sécurité dans un véhicule. Dans ces documents, il est prévu de réserver au moins une partie d'une surface d'affichage exclusivement à l'affichage d'un seul symbole ce qui réduit la surface d'affichage destinée à l'affichage d'autres informations et en plus les informations affichées sur le tableau de bord sont moins clairement présentées.

Par ailleurs, le document DE 100 18 336 A1 montre un tableau de bord de véhicule automobile comprenant au moins un moyen d'affichage.

La présente invention a notamment pour but de pallier aux inconvénients de l'art connu, et notamment ceux cités ci-dessus, et a également pour but de proposer un procédé d'affichage de façon à réduire au maximum la surface non utilisé pour la plupart du temps pour l'affichage de différents symboles d'alerte ou de sécurité d'une part et d'autre part de prévoir une présentation des informations affichées le plus clair possible.

Suivant l'invention, ce but est atteint par un procédé d'affichage d'un premier symbole et d'un deuxième symbole dans une zone d'affichage d'un tableau de bord, notamment selon l'une quelconque des revendications précédentes, le premier symbole étant affiché pendant un premier intervalle temporel dans la zone d'affichage et en ce que le deuxième symbole est affiché dans la zone d'affichage pendant un deuxième intervalle temporel. Selon la présente invention, il est également avantageusement possible d'indiquer différents symboles différemment, par exemple à travers une répétition et/ou un temps d'affichage et/ou un clignotement différent, notamment en fonction de l'alerte.

De par une telle réalisation du procédé d'affichage, il est avantageusement possible d'augmenter le niveau de sécurité d'un véhicule car l'utilisateur peut se concentrer sur les informations importantes et n'est pas distrait des informations principales par une multitude d'informations présentées et/ou par des endroits différents des informations.

Un perfectionnement préféré de l'invention réside dans le fait que le premier intervalle temporel est d'une première durée lorsque le premier symbole est un symbole de sécurité aigu et en ce que le premier intervalle temporel est d'une deuxième durée lorsque le premier symbole est un symbole de sécurité normal.

De par une telle réalisation du procédé d'affichage, il est avantageusement possible de réaliser un affichage flexible dans différents situations d'alerte ou de sécurité réduite.

Selon un mode de réalisation préféré du procédé d'affichage selon la présente invention, le moyen d'actuation acoustique est activé suivant une première manière lorsque le premier symbole est un symbole de sécurité aigu et en ce que le moyen d'actuation acoustique est activé suivant une deuxième manière lorsque le premier symbole est un symbole de sécurité normal.

Un perfectionnement préféré de l'invention réside dans le fait que l'affichage et/ou le rétroéclairage du premier symbole est activé suivant une première manière lorsque le premier symbole est un symbole de sécurité aigu et en ce que l'affichage et/ou le rétroéclairage du premier symbole est activé suivant une deuxième manière lorsque le premier symbole est un symbole de sécurité normal.

Le présent document concerne également un tableau de bord de véhicule automobile comprenant au moins un moyen d'affichage, le moyen d'affichage ayant une zone d'affichage, le moyen d'affichage étant prévu pour afficher un premier symbole dans la zone d'affichage et étant prévu pour afficher un deuxième symbole dans la zone d'affichage, le premier symbole et le deuxième symbole étant des symboles associés à une information de sécurité.

De par une telle réalisation du tableau de bord, une présentation très claire des informations affichées est possible. Ceci permet d'augmenter le niveau de sécurité d'un véhicule équipé d'un tel tableau de bord car l'utilisateur peut se concentrer sur les informations importantes et n'est pas distrait des informations principales par une multitude d'informations présentées et/ou par des endroits différents des informations. De plus, la surface totale d'affichage peut être réduite ce qui rend le tableau de bord inventif moins coûteux ou alors la surface d'affichage consacrée à la représentation de différents symboles d'alerte ou de sécurité peut être réduit au profit d'une représentation plus grande d'autres informations à afficher. Il est prévu d'afficher le premier symbole et le deuxième symbole dans la zone d'affichage, c'est à dire dans la même zone d'affichage du tableau de bord. Ceci implique que le premier symbole et le deuxième symbole ne peuvent pas être affichés (par exemple de manière superposée) en même temps.

Un perfectionnement préféré réside dans le fait que la zone d'affichage étant le seul endroit d'affichage pour le premier symbole et le deuxième symbole.

De par une telle réalisation du tableau de bord, il est avantageusement possible de réduire au maximum la surface d'affichage nécessaire pour visualiser le contenu d'information à transmettre à un utilisateur, notamment le conducteur, du véhicule. Il peut y avoir une suite de deux ou alors de trois ou alors de plus de trois symboles.

Selon un mode de réalisation préféré du tableau de bord, le moyen d'affichage est un moyen d'affichage de type matriciel ou pseudo matriciel.

De par une telle réalisation du tableau de bord, il est avantageusement possible de prévoir un affichage très flexible dans la zone d'affichage de manière pouvoir afficher une multitude de symboles différents (tailles, couleurs...).

Un perfectionnement préféré réside dans le fait que le tableau de bord comprend un moyen d'actuation acoustique, le moyen d'actuation acoustique étant prévu pour être activé lorsque le premier symbole ou le deuxième symbole est affiché dans la zone d'affichage.

De par une telle réalisation du tableau de bord, il est avantageusement possible d'informer l'utilisateur du véhicule de manière différente sur un état d'urgence ou de sécurité réduite.

D'autres caractéristiques et avantages de l'invention ressortiront à la lecture de la description qui suit d'un mode de réalisation particulier non limitatif de l'invention.

### BREVE DESCRIPTION DES DESSINS

L'invention sera mieux comprise grâce à la description ci-après, qui se rapporte à des modes de réalisation préférés, donnés à titre d'exemples non limitatifs, et expliqués avec référence aux dessins schématiques annexés, dans lesquels :
la figure 1 est une vue de perspective schématique sur un tableau de bord selon le présent document,
la figure 2 est une vue schématique d'un dispositif d'affichage, et
la figure 3 est une vue schématique sur un diagramme de représentation de l'évolution de l'affichage de plusieurs symboles.

### DESCRIPTION DES DESSINS

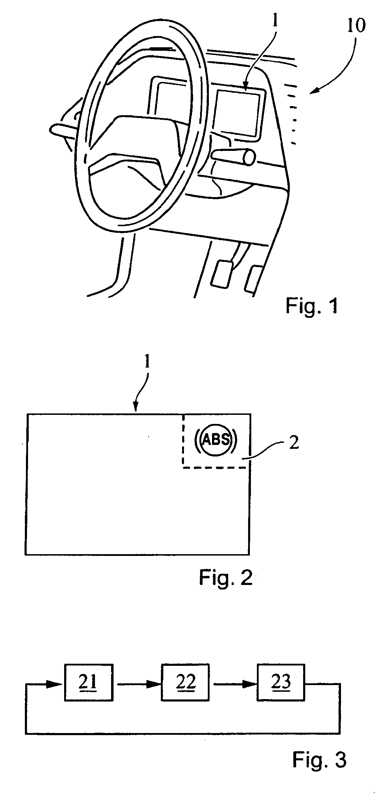

La figure 1 des dessins annexés montre une vue de perspective schématique sur un tableau de bord 10 selon le présent document. Le tableau de bord 10 comprend un moyen d'affichage 1.

La figure 2 des dessins annexés montre une vue schématique d'un moyen d'affichage 1 pour un tableau de bord 10. Le moyen d'affichage 1 comprend une zone d'affichage 2 dans laquelle il est possible d'afficher plusieurs symboles sur la même surface d'affichage 2. A titre d'exemple, un symbole concernant le système antiblocage (ABS) est représenté. Par exemple, l'affichage de ce symbole peut indiquer que l'état du système antiblocage n'est pas entièrement satisfaisant et/ou que le niveau de sécurité associé à ce système est réduit.

La figure 3 des dessins annexés montre une vue schématique sur un diagramme de représentation de l'évolution de l'affichage de plusieurs symboles, par exemple un premier symbole 21, un deuxième symbole 22 et un troisième symbole. Les symboles 21, 22, 23 sont par exemple affichés de manière alternante, c'est à dire le premier symbole 21 est affiché pendant un premier intervalle temporel, ensuite le deuxième symbole 22 est affiché pendant un deuxième intervalle temporel, ensuite le troisième symbole 23 est affiché pendant un troisième intervalle temporel, et ensuite, le premier symbole 21 est de nouveau affiché (notamment pendant le premier intervalle temporel). Par un tel affichage alternant, il est possible de représenter les symboles 21, 22, 23 de manière plus grande, augmentant ainsi la visibilité et clarté des informations affichées sur le tableau de bord 10 inventif. Les premier, deuxième et troisième intervalle temporels peuvent être de la même durée ou peuvent être d'une durée différente. Notamment, la durée des intervalles temporels peut varier en fonction du niveau d'urgence auquel le symbole correspondant est associé. Par exemple, un symbole représentant une information d'haute urgence peut être affiché plus longue (temporellement) par rapport à un symbole représentant une information de sécurité mais d'un niveau d'urgence réduit. Les différents niveaux d'urgence peuvent également être visualisés ou communiqués au conducteur du véhicule à travers d'autres moyens de transmission d'information, notamment à travers l'affichage sur la zone d'affichage 2 et un signal sonore ou alors à travers un mode différent d'affichage sur la zone d'affichage 2, par exemple à travers une couleur différente ou à travers la présence ou l'absence d'un rétro-éclairage du symbole affiché ou alors à travers l'activation d'un élément lumineux, notamment une diode électroluminescente (LED). Le signal sonore peut être produit par un moyen d'actuation acoustique (non représenté dans les dessins).

Si l'état du véhicule requiert seulement l'affichage d'un seul symbole d'alerte ou de sécurité, ce symbole est affiché en permanence et aucun affichage de manière alternante n'est utilisé.

Les symboles 21, 22, 23 peuvent être constitués par un ou plusieurs symboles graphiques et/ou par une ou plusieurs chiffres et/ou par une ou plusieurs lettres ou par un texte. Par exemple, le moyen d'affichage 1 est réalisé par un élément à cristaux liquides. Les symboles 21, 22, 23 peuvent notamment être présentés lors du démarrage du moteur du véhicule.

### Liste des signes de référence

- 1: moyen d'affichage
- 2: zone d'affichage
- 10: tableau de bord
- 21: premier symbole
- 22: deuxième symbole
- 23: troisième symbole

## Revendications

1. Procédé d'affichage d'un premier symbole (21) et d'un deuxième symbole (22) dans une zone d'affichage (2) d'un tableau de bord (1) de véhicule automobile comprenant au moins un moyen d'affichage (1), le moyen d'affichage (1) ayant une zone d'affichage (2), le moyen d'affichage (1) étant prévu pour afficher un premier symbole (21) dans la zone d'affichage (2) et étant prévu pour afficher un deuxième symbole (22) dans la zone d'affichage (2), le premier symbole (21) et le deuxième symbole (22) étant des symboles associés à une information de sécurité, et la zone d'affichage (2) étant le seul endroit d'affichage pour le premier symbole (21) et le deuxième symbole (22), **caractérisé en ce que** le premier symbole (21) est affiché pendant un premier intervalle temporel dans la zone d'affichage (2) et **en ce que** le deuxième symbole (22) est affiché dans la zone d'affichage (2) pendant un deuxième intervalle temporel, et **en ce que** le premier intervalle temporel est d'une première durée lorsque le premier symbole (21) est un symbole de sécurité aigu et **en ce que** le premier intervalle temporel est d'une deuxième durée lorsque le premier symbole (21) est un symbole de sécurité normal.

2. Procédé d'affichage selon la revendication 1, **caractérisé en ce que** le tableau de bord (10) comprend un moyen d'actuation acoustique, le moyen d'actuation acoustique étant prévu pour être activé lorsque le premier symbole (21) ou le deuxième symbole (22) est affiché dans la zone d'affichage (2), le moyen d'actuation acoustique étant activé suivant une première manière lorsque le premier symbole (21) est un symbole de sécurité aigu et **en ce que** le moyen d'actuation acoustique est activé suivant une deuxième manière lorsque le premier symbole (21) est un symbole de sécurité normal.

3. Procédé d'affichage selon la revendication 1, **caractérisé en ce que** l'affichage et/ou le rétro-éclairage du premier symbole (21) est activé suivant une première manière lorsque le premier symbole (21) est un symbole de sécurité aigu et **en ce que** l'affichage et/ou le rétro-éclairage du premier symbole (21) est activé suivant une deuxième manière lorsque le premier symbole (21) est un symbole de sécurité normal.

## Patentansprüche

1. Verfahren zum Anzeigen eines ersten Symbols (21) und eines zweiten Symbols (22) in einer Anzeigezone (2) eines Armaturenbretts (1) eines Kraftfahrzeugs, das wenigstens ein Anzeigemittel (1) umfasst, wobei das Anzeigemittel (1) eine Anzeigezone (2) besitzt, wobei das Anzeigemittel (1) vorgesehen ist, um ein erstes Symbol (21) in der Anzeigezone (2) anzuzeigen, und vorgesehen ist, um ein zweites Symbol (22) in der Anzeigezone (2) anzuzeigen, wobei das erste Symbol (21) und das zweite Symbol (22) Symbole sind, die Sicherheitsinformationen zugeordnet sind, und die Anzeigezone (2) der einzige Anzeigeort für das erste Symbol (21) und das zweite Symbol (22) ist, **dadurch gekennzeichnet, dass** das erste Symbol (21) während eines ersten Zeitintervalls in der Anzeigezone (2) angezeigt wird und das zweite Symbol (22) in der Anzeigezone (2) während eines zweiten Zeitintervalls angezeigt wird und dass das erste Zeitintervall eine erste Dauer ist, wenn das erste Symbol (21) ein wichtiges Sicherheitssymbol ist, und dass das erste Zeitintervall eine zweite Dauer ist, wenn das erste Symbol (21) ein normales Sicherheitssymbol ist.

2. Anzeigeverfahren nach Anspruch 1, **dadurch gekennzeichnet, dass** das Armaturenbrett (10) ein akustisches Betätigungsmittel umfasst, wobei das akustische Betätigungsmittel vorgesehen ist, um aktiviert zu werden, wenn das erste Symbol (21) oder das zweite Symbol (22) in der Anzeigezone (2) angezeigt wird, wobei das akustische Betätigungsmittel auf eine erste Weise aktiviert wird, wenn das erste Symbol (21) ein wichtiges Sicherheitssymbol ist, und dass das akustische Betätigungsmittel auf eine zweite Weise aktiviert wird, wenn das erste Symbol (21) ein normales Sicherheitssymbol ist.

3. Anzeigeverfahren nach Anspruch 1, **dadurch gekennzeichnet, dass** die Anzeige und/oder die Hinterleuchtung des ersten Symbols (21) auf eine erste Weise aktiviert wird, wenn das erste Symbol (21) ein starkes Sicherheitssymbol ist, und dass die Anzeige und/oder die Hinterleuchtung des ersten Symbols (21) auf eine zweite Weise aktiviert wird, wenn das erste Symbol (21) ein normales Sicherheitssymbol ist.

## Claims

1. Method of displaying a first symbol (21) and a second symbol (22) in a display area (2) of a dashboard (1) of a motor vehicle comprising at least one display means (1), the display means (1) having a display area (2), the display means (1) being adapted to display a first symbol (21) in the display area (2) and to display a second symbol (22) in the display area (2), the first symbol (21) and the second symbol (22) being symbols associated with safety information, and the display area (2) being the only display area for the first symbol (21) and the second symbol (22), **characterized in that** the first symbol (21) is displayed in the display area (2) for a first time interval and the second symbol (22) is displayed in the display area (2) for a second time interval, and the first time interval has a first duration when the first symbol (21) is an acute safety symbol and the first time interval has a second duration when the first symbol (21) is a normal safety symbol.

2. Display method according to Claim 1, **characterized in that** the dashboard (10) includes acoustic actuation means, the acoustic actuation means being adapted to be activated when the first symbol (21) or the second symbol (22) is displayed in the display area (2), the acoustic actuation means being activated in a first manner when the first symbol (21) is an acute safety symbol and the acoustic actuation means being activated in a second manner when the first symbol (21) is a normal safety symbol.

3. Display method according to Claim 1, **characterized in that** display and/or backlighting of the first symbol (21) is activated in a first manner when the first symbol (21) is an acute safety symbol and display and/or backlighting of the first symbol (21) is activated in a second manner when the first symbol (21) is a normal safety symbol.
